# EUROPEAN PATENT APPLICATION

(11) **EP 1 575 302 A2**
(43) Date of publication of application: **14.09.2005**
(21) Application number: 05003494.1
(22) Date of filing: 18.02.2005
(51) Int. Cl.: H04N 7/64, H04N 7/50, H04N 7/32

(54) **Intra block walk around refresh for H.264**

(30) Priority: 12.03.2004 US 799829
(71) Applicant: POLYCOM, INC., California 94588 (US)
(72) Inventor: Sievers, John, Wakefield Massachusetts 01880 (US)
(74) Representative: Käck, Jürgen

(57) **Abstract**

The disclosed video encoding system provides for a way of correcting divergence of a reference block in a decoder while minimizing the overhead required to update the reference block.

The H.264 standard articulates that only macroblocks within the same slice group may be spatially predicted off one another. A map describing which slice group each macroblock in the frame is assigned to may be sent according to H.264. By sending a map placing a small subset of macroblocks in one slice group and the remainder of the macroblocks in one or more other slice groups, one can produce the effect of isolating the refresh blocks of the picture from blocks that exploit image redundancies. Further, by sending a different map for each transmitted frame, each map corresponding with the macroblocks to be intra refreshed in that frame, the effect of gradually refreshing all parts of the image can be achieved. By assigning a different frame index to each transmitted map, the map description only needs to be sent once at the start of the communication. The result is an efficiently transmitted self-correcting video sequence with only the additional channel overhead of sending the plurality of refresh maps at the start of the communication.

## Description

### BACKGROUND OF THE INVENTION

### 1. Field of the Invention

The present invention relates generally to video communication, and more particularly to providing an efficient method of updating a digitally transmitted video image while making efficient use of a given bit budget.

### 2. Description of Related Art

Digitization of video images has become increasingly important. In addition to their use in global communication (e.g., videoconferencing), digitization of video images for digital video recording has also become increasingly common. In each of these applications, video and accompanying audio information is transmitted across telecommunication links including telephone lines, ISDN, DSL, and radio frequencies, or stored on various media devices such as DVDs and SVCDs.

Presently, efficient transmission and reception, as well as efficient storage of video data may require encoding and compression of video and accompanying audio data. Video compression coding is a method of encoding digital video data such that less memory is required to store the video data and a required transmission bandwidth is reduced. Certain compression/decompression (CODEC) schemes are frequently used to compress video frames to reduce required transmission bit rates. Thus, CODEC hardware and software allow digital video data to be compressed into a more compact binary format than required by the original (i.e., uncompressed) digital video format.

Several approaches and standards to encoding and compressing source video signals exist. Some standards are designed for a particular application, such as ITU-T Recommendations H.261, H.263, and H.264, which are used extensively in video conferencing applications. Additionally, standards promulgated by the Motion Picture Experts' Group (MPEG-2, MPEG-4) have found widespread application in consumer electronics and other applications. Each of these standards is incorporated by reference in its entirety.

A digital image is comprised of a grid of individual pixels. Typically, the whole image is not processed at one time, but is divided into blocks that are individually processed. Each block comprises a rectangular grid of a predetermined number of luminance or luma pixels (which generally specify the brightness of a pixel) and a predetermined number of chrominance or chroma pixels (which generally specify the color of a pixel). A predetermined number of blocks are combined into a macroblock, which forms the basic unit of processing in, for example, the H.264 standard. Additionally, in the H.264 standard, a group of macroblocks may be combined into a larger processing unit known as a slice. Although some aspects of this hierarchy of processing units are discussed below, methods and techniques for block-based processing of images for processing are generally known to those skilled in the art, and thus are not repeated here in detail.

The blocks of image data may be encoded in a variation of one of two basic techniques. For example, "Intra" coding may be used, in which the original block is encoded without reference to historical data, such as a corresponding block from a previous frame. Alternatively, "Inter" coding, in which the block of image data is encoded in terms of the differences between the block and a reference block of data, such as a corresponding block from a previous frame. Many variations on these two basic schemes are known to those skilled in the art, and thus are not discussed here in detail. It is generally desirable to select the encoding technique which requires the fewest number of bits to describe the block of data.

Intraframe encoding typically requires many more bits to represent the block. Therefore, interframe encoding is generally preferred. However there are some situations where the reference image block maintained at the receiver diverges from the corresponding reference block stored at the transmitter, such as when there are algorithmic differences in the implementation of the Inverse Discrete Cosine Transform (IDCT), or when transmission errors occur. Accordingly, when the transmitter encodes a block relative to a given reference, the block reconstructed by the receiver will differ from the block intended by the transmitter. It is therefore desirable that each block of data be coded in intraframe mode at least once for a given number of times that the block is coded in interframe mode. Details of one technique for such coding in the context of the H.261 standard are disclosed in U.S. Patent 5,644,660 to Bruder, which is hereby incorporated by reference in its entirety.

However, these prior art techniques are not suitable for application to newer coding standards, such as H.264. Particularly, in the H.264 video codec, unless the "constrained Intra" flag for the frame is set, Intra blocks are always predicted from the neighboring pixels. If the "constrained Intra" flag is set, all Intra blocks in the frame are only predicted from other Intra blocks, not necessarily from surrounding pixels. So, if one wants to gradually refresh the image by sending one or two Intra blocks each frame, one is given the undesirable choice of: (1) if the "constrained Intra" flag is clear, having image defect errors propagate into Intra regions due to the Intra prediction, or (2) if the "constrained Intra" flag is set, losing a significant benefit of the H.264 video codec by having all Intra blocks in the frame, whether they are refresh blocks or blocks that are more efficiently transmitted as Intra, constrained to only using neighboring Intra coded pixels.

Therefore, there is a need for a system and a method to provide improved Intra refresh while preserving the efficiency of the video codec, thereby improving video quality.

### SUMMARY OF THE INVENTION

The present invention is directed to a method for a video encoder, by the use of classification maps, to transmit groups of pixels that are used to refresh discrepancies between an encoder's and decoder's reference frames. Because the groups of pixels are being used for what is essentially an error correction task, they cannot be based on information from other pixels, as opposed to groups of pixels that use image redundancies to improve coding efficiency. The H.264 standard articulates that only macroblocks within the same slice group may be spatially predicted off one another. H.264 also permits a map to be sent describing which slice group each macroblock in the frame is assigned to. By sending a map placing a small subset of macroblocks in one slice group and the remainder of the macroblocks in one or more other slice groups, one can produce the desired effect of isolating the refresh blocks of the picture from blocks that exploit image redundancies. Further, by sending a different map for each transmitted frame, each map corresponding with the macroblocks to be Intra refreshed in that frame, the effect of gradually refreshing all parts of the image can be achieved. Finally, by assigning a different frame index to each transmitted map, the map description only needs to be sent once at the start of the communication. All subsequent frames that use the same pattern of refresh blocks can reference the previously transmitted map index. The result is an efficiently transmitted self-correcting video sequence with only the additional channel overhead of sending the plurality of refresh maps at the start of the communication.

The invention maintains the highest level of video quality and compression rate while still giving the ability to clean up occasional line errors in H.264 conferences. Although the invention is described with reference to a video conferencing application, it is foreseen that the invention would also find beneficial application in other applications involving digitization of video data, *e.g.*, the recording of DVDs, etc.

### BRIEF DESCRIPTION OF THE DRAWINGS

FIG. 1 is a block diagram of an exemplary video conferencing system;
FIG. 2 is a block diagram of an exemplary video conference station of the video conferencing system of FIG. 1;
FIG. 3 is a block diagram of an exemplary embodiment of the image processing engine of FIG. 2.

### DETAILED DESCRIPTION OF THE INVENTION

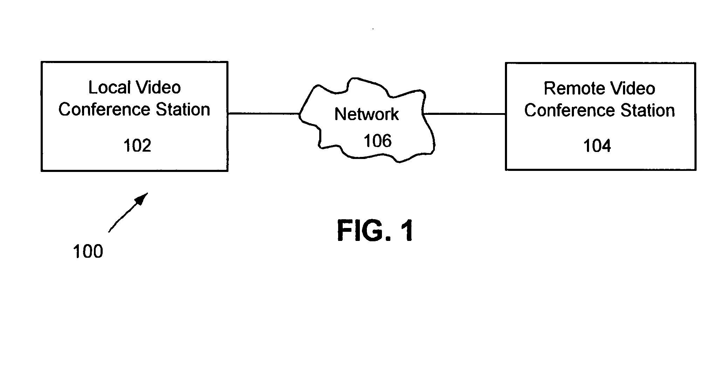

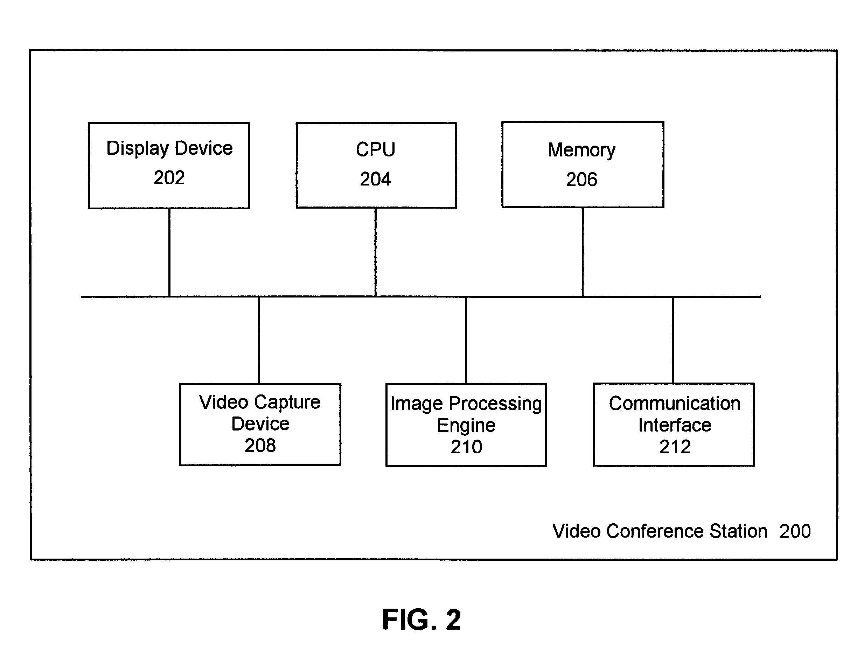

FIG. 1 illustrates an exemplary video conferencing system 100. The video conferencing system 100 includes a local video conference station 102 and a remote video conference station 104 connected through a network 106. Although FIG. 2 only shows two video conference stations 102 and 104, those skilled in the art will recognize that more video conference stations may be coupled to the video conferencing system 100. It should be noted that the present system and method may be utilized in any communication system where video data is transmitted over a network. The network 106 may be any type of electronic transmission medium, such as, but not limited to, POTS (Plain Old Telephone Service), cable, fiber optic, and radio transmission media.

FIG. 2 is a block diagram of an exemplary video conference station 200. For simplicity, the video conference station 200 will be described as the local video conference station 102 (FIG. 1), although the remote video conference station 104 (FIG. 1) may contain a similar configuration. In one embodiment, the video conference station 200 includes a display device 202, a CPU 204, a memory 206, at least one video capture device 208, an image processing engine 210, and a communication interface 212. Alternatively, other devices may be provided in the video conference station 200, or not all above named devices provided.

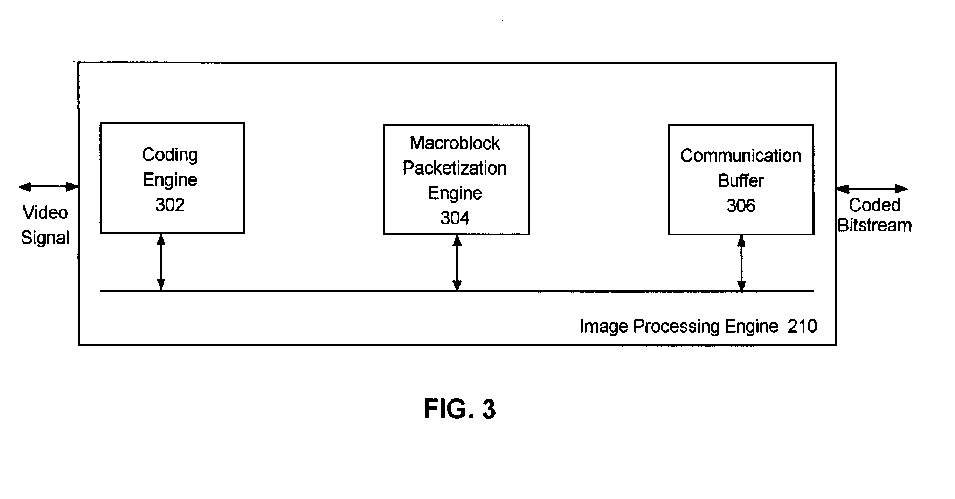

The at least one video capture device 208 may be implemented as a charge coupled device (CCD) camera, a complementary metal oxide semiconductor (CMOS) camera, or any other type of image capture device. The at least one video capture device 208 captures images of a user, conference room, or other scenes, and sends the images to the image processing engine 210. The image processing engine 210 will be discussed in more detail in connection with FIG. 3. Conversely, the image processing engine 210 also transforms received data packets from the remote video conference station 104 into a video signal for display on the display device 202.

FIG. 3 is an exemplary embodiment of the image processing engine 210 of FIG. 2. The image processing engine 210 includes a coding engine 302, a transport engine 304, configured to place each of the encoded macroblocks into a particular format for transmission across the network, and a communication buffer 306. In other embodiments of the invention, the transport engine may be a macroblock packetization engine or may be absent or may be incorporated in the coding engine 302. Additionally, the image processing engine 210 may include more or fewer elements.

Initially, a video signal from the video capture device 208 (FIG. 2) enters the coding engine 302, which converts each frame of video into a desired format, and transforms each frame of the video signal into a set of macroblocks. A macroblock is a data unit that contains blocks of data comprising luminance and chrominance components associated with picture elements (also referred to as pixels). For example, in the H.264 standard, a picture is divided into slices. A slice is a sequence of macroblocks (or macroblock pairs if macroblock-adaptive frame/field decoding is in use). H.264 block sizes are different than H.261 and H.263, although the macroblock is still the same. For reference H.264 allows the macroblock to be broken up into different size components for Inter blocks, and even Intra blocks allow both a 16 pixel x 16 pixel mode and a 4 pixel x 4 pixel mode. The DCT/Quantization/IDCT is done on 4x4 blocks instead of 8x8 blocks as in H.261 and H.263. Each macroblock is comprised of one 16x 16 luminance and two 8x8 chrominance sample arrays. A macroblock comprises four 8 x 8 blocks of luminance data and two corresponding 8 x 8 blocks of chrominance data in a 4:2:0 chroma sampling format. An 8 x 8 block of data is an eight-column by eight-row matrix of data, where each data corresponds to a pixel of the video frame.

However, it should be noted that the present invention is not limited to macroblocks as conventionally defined, but may be extended to any data unit comprising luminance and/or chrominance data. In addition, the scope of the present invention covers other sampling formats, such as a 4:2:2 chroma sampling format comprising four 8 x 8 blocks of luminance data and four corresponding 8 x 8 blocks of chrominance data, or a 4:4:4 chroma sampling format comprising four 8 x 8 blocks of luminance data and eight corresponding 8 x 8 blocks of chrominance data.

In addition, the coding engine 302 encodes each macroblock to reduce the number of bits used to represent the image content. Each macroblock may be "intra-coded" or "inter-coded," and a video frame may be comprised of a combination of intra-coded and inter-coded macroblocks. Intra-coded macroblocks are encoded without use of information from other video frames, *i.e.*, intra-coded frames are coded only with reference to themselves. Alternatively, inter-coded macroblocks are encoded using temporal similarities (*i.e.*, similarities that exist between a macroblock from one frame and a closely matched macroblock from a previously coded frame). The corresponding macroblock from a previous reference video frame need not be in an identical spatial position within the previous frame, but rather may comprise data associated with pixels that are spatially offset from the pixels associated with the given macroblock. This arises from the use of motion compensation techniques that are known to those skilled in the art, and thus the details are not reproduced here.

Coding engine 302 preferably intra-codes macroblocks of a frame using a refresh mechanism. The refresh mechanism is a deterministic mechanism to eliminate mismatches between the encoder and decoder reference frames by intra-coding a specific pattern of macroblocks for each frame. For future reference, a macroblock intra-coded via the refresh mechanism will be referred to as a refresh intra-coded macroblock. The details of a refresh mechanism are discussed in U.S. Patent Application serial no. 10/328,513, filed December 23, 2002, entitled "Dynamic Intra-coded Macroblock Refresh Interval for Video Error Concealment," which is commonly owned with the present application and which is hereby incorporated by reference in its entirety.

Coding engine 302 preferably generates an intra-macroblock map that identifies which macroblocks in a coded video frame are intra-coded. After the intra-macroblock map is generated, the image processing engine 210 sends the map to the remote video conference station 104 (FIG. 1). The map may be sent as part of a picture header data associated with the coded video frame, for example, although other data fields may be used.

As noted above, each picture of a video sequence is divided into one or more slices. Each slice comprises some number of macroblocks. The macroblock to slice group map is a way of mapping macroblocks of a picture into slice groups. The macrolock to slice group map consists of a list of numbers, one for each coded macroblock, specifying the slice group to which each coded macroblock belongs.

H.264 permits Flexible Macroblock Ordering, which is accomplished by specifying in the macroblock to slice group map what slice group each macroblock in the frame is assigned to. During the coding process, only macroblocks in the same slice group can be predicted off one another. By sending a plurality of maps, each map placing a different one or two macroblocks in one slice group and the remainder of the macroblocks in the frame in the other slice group, and then indexing the appropriate map to correspond with the macroblocks to be Intra refreshed in the frame, the designer can produce the desired effect of refreshing parts of the picture without the risk of error propagation into the refreshed areas. Meanwhile coding efficiency is maintained in the remainder of the picture since all of the other macroblocks belong to the same slice group.

It is important to note that the intra-macroblock maps only need to be transmitted once during a video sequence/videoconference/movie. The H.264 standard requires the decoder to be capable of retaining up to 256 intra-macroblock maps simultaneously. After a map has been transmitted, the encoder simply needs to refer to that map by number for the decoder to recall which map is being used for that frame, thereby maintaining the highest level of coding efficiency.

The invention has been explained above with reference to exemplary embodiments. It will be evident to those skilled in the art that various modifications may be made thereto without departing from the broader spirit and scope of the invention. Further, although the invention has been described in the context of its implementation in particular environments and for particular applications, those skilled in the art will recognize that the present invention's usefulness is not limited thereto and that the invention can be beneficially utilized in any number of environments and implementations. The foregoing description and drawings are, accordingly, to be regarded in an illustrative rather than a restrictive sense.

## Claims

1. A method of encoding video data comprising:
dividing each frame of a video signal into a plurality of macroblocks;
assigning, for each frame, one or more of the plurality of macroblocks to be Intra refreshed to a first slice group;
assigning, for each frame, a remainder of the plurality of macroblocks to one or more other slice groups;
generating a map indicating what macroblocks were assigned to the first slice group; and
indexing the map for each subsequent frame to correspond to the macroblocks to be Intra refreshed in the subsequent frame.

2. The method of claim 1 further comprising the step of transmitting video data comprising the plurality of macroblocks and the map to another device.

3. A method of decoding a video signal comprising:
receiving a signal comprising a plurality of macroblocks, wherein one or more of the macroblocks is assigned to a first slice group and the remaining macroblocks are assigned to one or more other slice groups, and a map indicating what macroblocks were assigned to the first slice group;
decoding the one or more macroblocks assigned to the first slice group as Intra encoded without referring to macroblocks not assigned to the first slice group;
decoding the remaining macroblocks assigned to one or more other slice groups; and
generating a frame of video from the decoded macroblocks.

4. The method of claim 3 further comprising:
indexing the map for a subsequent frame;
decoding one or more macroblocks corresponding to the subsequent frame and assigned to a first slice group of the subsequent frame without referring to macroblocks not assigned to the first slice group in the subsequent frame;
decoding the remaining macroblocks corresponding to the subsequent frame; and
regenerating the subsequent frame of video from the decoded macroblocks.

5. The method of claim 3 further comprising the step of displaying the generated frame.

6. A memory storage medium having stored thereupon video data, wherein the video data is divided into a sequence of frames, each frame being subdivided into a plurality of macroblocks, wherein one or more of the macroblocks are assigned to a first slice group and the remainder of the plurality of macroblocks are assigned to one or more other slice groups, the video data further comprising a map indicating what macroblocks were assigned to the first slice group, wherein the macroblocks assigned to the first slice group are encoded as Intra blocks, and wherein the remaining macroblocks are coded as Intra or Inter coded blocks.

7. An apparatus for encoding a video signal, the apparatus comprising a CPU and an image processing engine, wherein the apparatus is programmed to:
divide each frame of a video signal into a plurality of macroblocks;
assign one or more of the plurality of macroblocks for each frame to be Intra refreshed to a first slice group;
assign a remainder of the plurality of macroblocks for each frame to one or more other slice groups;
generate a map indicating what macroblocks were assigned to the first slice group; and
index the map for each subsequent frame to correspond to the macroblocks to be Intra refreshed in the subsequent frame.

8. The apparatus of claim 7 further comprising a video capture device.

9. An apparatus for decoding video data, the apparatus comprising a CPU programmed to:
receive a signal comprising a plurality of macroblocks, wherein one or more of the macroblocks is assigned to a first slice group and the remaining macroblocks are assigned to one or more other slice groups, and a map indicating what macroblocks were assigned to the first slice group;
decode the one or more macroblocks assigned to the first slice group as Intra encoded macroblocks without reference to macroblocks outside the first slice group;
decode the remaining macroblocks assigned to one or more other slice groups as Intra or Inter coded macroblocks; and
generate a frame of video from the decoded macroblocks.

10. The apparatus of claim 9 further comprising a display device, wherein the CPU is programmed to effect display of the generated frame of video on the display device.
